# EUROPÄISCHE PATENTSCHRIFT

(11) **EP 4 005 697 B1**
(45) Veröffentlichungstag und Bekanntmachung des Hinweises auf die Patenterteilung: **10.04.2024**
(21) Anmeldenummer: 20210150.7
(22) Anmeldetag: 27.11.2020
(51) Int. Cl.: B22D 11/04, B22D 11/057, B22D 11/16, B22D 11/18, G01K 11/3206

(54) **VORRICHTUNG UND VERFAHREN ZUR TEMPERATURERFASSUNG IN EINER SEITENWANDPLATTE EINER GIESSKOKILLE**
DEVICE AND METHOD FOR DETERMINING TEMPERATURE IN A SIDE WALL PLATE OF A CASTING MOLD
DISPOSITIF ET PROCEDE POUR DETERMINER LA TEMPERATURE DANS UNE PAROI LATERALE D'UN MOULE DE FONDERIE

(43) Veröffentlichungstag der Anmeldung: 01.06.2022
(73) Patentinhaber: Primetals Technologies Austria GmbH, 4031 Linz (AT)
(72) Erfinder: Lang, Oliver, 4407 Dietach (AT); Leitner, Guenter, 4240 Freistadt (AT); Muehlbachler, Martin, 4020 Linz (AT); Schuster, Martin, 4794 Kopfing (AT)
(74) Vertreter: Metals@Linz

(56) Entgegenhaltungen:
- EP-A1- 3 424 614
- WO-A1-2011/038876
- JP-A- 2008 260 046
- US-A1- 2011 144 790
- US-A1- 2011 186 262

## Beschreibung

Die Erfindung betrifft eine Messvorrichtung zur Temperaturerfassung in einer Seitenwandplatte einer Gießkokille und eine Gießkokille mit einer derartigen Messvorrichtung.

Gießkokillen werden beim Stranggießen metallischer Stränge verwendet. Beim Stranggießen wird in eine Kokille eine Metallschmelze gegossen, die an Seitenwänden der Kokille zu einem metallischen Strang mit einer bereits erstarrten Strangschale und einem noch flüssigen Kern erstarrt. Synchron mit dem Gießen der Schmelze in die Kokille wird der teilerstarrte Strang aus der Kokille abgezogen. Das Abziehen des Strangs wird mit dem Gießen derart koordiniert, dass ein Gießspiegel, das heißt ein Flüssigkeitsstand in der Kokille, im Wesentlichen konstant bleibt.

Der aus der Kokille austretende Strang muss eine bereits hinreichend dicke Strangschale aufweisen, da anderenfalls die Gefahr eines Schalendurchbruchs besteht. Weiterhin darf die Strangschale nicht an den Kokillenwänden anhaften. Entscheidend für einen stabilen Gießprozess sind insbesondere eine ausreichende Kühlung und eine der Kokille angepasste Gießgeschwindigkeit. Um den Gießprozess zu steuern, wird insbesondere eine Temperaturverteilung in der Kokille überwacht. Dazu werden beispielsweise Temperaturen einer Seitenwandplatte der Kokille erfasst, die in Kontakt dem teilerstarrten Strang in der Kokille steht. Die Temperaturen werden beispielsweise an verschiedenen Stellen der Seitenwandplatte erfasst, um eine zweidimensionale Temperaturverteilung in vertikaler und horizontaler Richtung zu ermitteln.

EP 3 424 614 A1 offenbart einen Einbau eines faseroptischen Temperatursensors in eine Kokille und eine Kokille mit mehreren faseroptischen Temperatursensoren.

WO 2017/186702 A2 offenbart ein Verfahren zum Einbringen eines Lichtwellenleiters in eine Seitenwand einer Stranggießkokille. Dabei wird eine Querschnittsfläche einer entsprechenden Hilfsausnehmung durch Einbringen eines Zusatzelements verkleinert, um für den Lichtwellenleiter eine Ausnehmung mit kleinerer Querschnittsfläche zu schaffen.

Aus der WO 2011/038876 A1 ist ein Sensorelement zur Messung eines Temperaturgradienten in einem Bauteil einer metallurgischen Anlage bekannt. Das Sensorelement weist dabei einen Grundkörper auf, der in eine Ausnehmung des zu messenden Bauteils eingebracht werden kann. An oder in dem Grundkörper sind in einem definierten Abstand zueinander zumindest zwei Lichtwellenleiter angeordnet, die zur Erfassung eines Temperatursignals ausgestaltet und mit einer Auswerteeinheit optisch verbindbar sind.

US 2011/0186262 A1 zeigt eine Gießkokille zum Gießen von Metall, in deren Seitenwandplatten eine Mehrzahl von Temperatursensoren angeordnet sind. Um die Installation der Temperatursensoren zu vereinfachen und die Zuverlässigkeit der Messungen zu erhöhen, werden jeweils mehrere Temperatursensoren in fixen Abständen zueinander in Nuten an der Oberfläche eines Modulblocks eingebracht. Der Modulblock bildet mit den Temperatursensoren jeweils eine strukturelle Einheit, die in entsprechende Ausnehmungen der Seitenwandplatten eingesetzt werden kann. US2011144790 offenbart ein Beispiel einer optischen Faser mit Bragg-Gittern zur Temperaturmessung in einer Gussform, mit spezifischen technischen Implementierungen zur Entlastung der Faser.

Der Erfindung liegt die Aufgabe zugrunde, die Temperaturerfassung in einer Seitenwandplatte einer Gießkokille zu verbessern.

Die Aufgabe wird erfindungsgemäß durch eine Messvorrichtung mit den Merkmalen des Anspruchs 1, ein Verfahren zur Herstellung einer derartigen Messvorrichtung mit den Merkmalen des Anspruchs 6, eine Gießkokille mit den Merkmalen des Anspruchs 7 und ein Verfahren zum Betreiben einer derartigen Gießkokille mit den Merkmalen des Anspruchs 11 gelöst.

Vorteilhafte Ausgestaltungen der Erfindung sind Gegenstand der Unteransprüche.

Eine erfindungsgemäße Messvorrichtung zur Temperaturerfassung in einer Seitenwandplatte einer Gießkokille umfasst einen faseroptischen Sensor mit einem Messabschnitt, der zur Temperaturerfassung eingerichtet ist, und einem Zuleitabschnitt, der zum Zuleiten elektromagnetischer Strahlung zu dem Messabschnitt und Ableiten elektromagnetischer Strahlung aus dem Messabschnitt eingerichtet ist, und einen Einbauteil, innerhalb dessen ein Teil des Messabschnitts verläuft. Der Messabschnitt des faseroptischen Sensors weist einen Lichtwellenleiter mit wenigstens einem Faser-Bragg-Gitter in einem außerhalb des Einbauteils verlaufenden Teil des Messabschnitts auf, wobei das Faser-Bragg-Gitter in einem vorgegebenen Abstand von einem Referenzpunkt an dem Einbauteil angeordnet ist. Der Referenzpunkt ist ein Punkt einer Anlagefläche des Einbauteils, mit der der Einbauteil an einer Stützfläche der Seitenwandplatte anliegt.

Bei der erfindungsgemäßen Messvorrichtung verläuft ein Teil des Zuleitabschnitts innerhalb des Einbauteils und der Zuleitabschnitt und der Messabschnitt sind innerhalb des Einbauteils miteinander verbunden, das heißt die Verbindungsstelle des Zuleitabschnitts und des Messabschnitts ist innerhalb des Einbauteils angeordnet. Dadurch wird insbesondere diese Verbindungsstelle vorteilhaft durch den Einbauteil geschützt und stabilisiert. Auch der innerhalb des Einbauteils verlaufende Teil des Zuleitabschnitts ist dabei vorzugsweise in dem Führungskanal angeordnet und analog zu dem Messabschnitt mit dem Einbauteil verklebt.

Bei der erfindungsgemäßen Messvorrichtung verläuft der faseroptische Sensor innerhalb des Einbauteils gekrümmt. Dadurch kann insbesondere eine Umlenkung des faseroptischen Sensors innerhalb des Einbauteils erreicht werden.

Eine erfindungsgemäße Messvorrichtung ermöglicht die Temperaturerfassung in einer Seitenwandplatte einer Gießkokille durch einen faseroptischen Sensor mit wenigstens einem Faser-Bragg-Gitter. Ein derartiger faseroptischer Sensor eignet sich zur Temperaturmessung in einer Seitenwandplatte einer Gießkokille unter anderem, weil die Temperaturmessung mit dem faseroptischen Sensor unempfindlich gegenüber Störungen durch elektromagnetische Felder ist, im Unterschied beispielsweise zur Temperaturmessung mit Thermoelementen. Störende elektromagnetische Felder können beispielsweise von einem elektromagnetischen Rührer (engl. mold electromagnetic stirrer, abgekürzt MEMS) oder einer elektromagnetischen Bremse (engl. electromagnetic brake, abgekürzt EMB) verursacht werden. Elektromagnetische Rührer und Bremsen werden für Gießkokillen immer häufiger eingesetzt, um auf metallische Schmelzen in den Gießkokillen einzuwirken.

Der Einbauteil ermöglicht einen einfachen Einbau des faseroptischen Sensors in eine Seitenwandplatte einer Gießkokille sowie den Ausbau des faseroptischen Sensors aus der Seitenwandplatte, indem der Einbauteil in eine entsprechende Plattenausnehmung in der Seitenwandplatte eingesetzt wird beziehungsweise aus der Plattenausnehmung herausgezogen wird. Dadurch ist der faseroptische Sensor insbesondere wiederverwendbar. Dies ist besonders vorteilhaft, weil die Lebensdauer eines faseroptischen Sensors in der Regel höher ist als die Lebensdauer einer Seitenwandplatte einer Gießkokille. Eine derartige Seitenwandplatte muss nämlich regelmäßig auf der innenliegenden Heißseite nachgefräst werden, um Verschleißerscheinungen zu beseitigen, und muss daher nach einer gewissen Einsatzdauer verschrottet werden, wenn ihre Dicke für eine weitere Verwendung nicht mehr ausreicht. Der Einbauteil schützt den faseroptischen Sensor ferner vorteilhaft vor mechanischen Belastungen bei dessen Ein- und Ausbau.

Insbesondere kann der faseroptische Sensor einen Lichtwellenleiter mit mehreren entlang seiner Länge verteilten Faser-Bragg-Gittern aufweisen. Dadurch können vorteilhaft gleichzeitig Temperaturen an mehreren Orten in der Seitenwandplatte erfasst werden, beispielsweise entlang einer vertikalen oder horizontalen Ausdehnung der Seitenwandplatte. Da erfindungsgemäß die Faser-Bragg-Gitter jeweils in einem vorgegebenen Abstand von einem Referenzpunkt an dem Einbauteil angeordnet sind, werden die Temperaturen dabei an definierten Messpositionen erfasst, die durch die Abstände der Faser-Bragg-Gitter von dem Referenzpunkt gegeben sind.

Bei einer Ausgestaltung der erfindungsgemäßen Messvorrichtung weist die Messvorrichtung ein Dichtelement auf, das an einer Außenoberfläche des Einbauteils angeordnet ist. Durch das Dichtelement kann vorteilhaft eine Einbaustelle für den Einbauteil in der Seitenwandplatte zum Schutz des faseroptischen Sensors vor Feuchtigkeit und Schmutz abgedichtet werden.

Bei einer weiteren Ausgestaltung der erfindungsgemäßen Messvorrichtung weist der Einbauteil einen Führungskanal auf, in dem der innerhalb des Einbauteils verlaufende Teil des Messabschnitts des faseroptischen Sensors angeordnet ist. Dadurch wird der Messabschnitt des faseroptischen Sensors innerhalb des Einbauteils stabilisiert und positioniert.

Bei einer weiteren Ausgestaltung der erfindungsgemäßen Messvorrichtung ist der Messabschnitt des faseroptischen Sensors mit dem Einbauteil durch einen Klebstoff verklebt. Der Klebstoff füllt beispielsweise einen Zwischenraum zwischen einer Führungskanalwandung des Führungskanals und dem Messabschnitt des faseroptischen Sensors vollständig aus. Genauer gesagt weist der Messabschnitt eine Schutzkanüle auf, in der der Lichtwellenleiter des Messabschnitts angeordnet ist und die mit dem Einbauteil verklebt ist. Die Verklebung mit dem Einbauteil stabilisiert den Messabschnitt des faseroptischen Sensors ebenfalls innerhalb des Einbauteils. Durch ein Ausfüllen des Zwischenraums zwischen einer Führungskanalwandung des Führungskanals und dem Messabschnitt des faseroptischen Sensors wird ferner vorteilhaft eine Dichtheit des Einbauteils gegen ein Eindringen von Feuchtigkeit und Schmutz erreicht.

Bei einer weiteren Ausgestaltung der erfindungsgemäßen Messvorrichtung ist der Einbauteil aus Kunststoff oder Metall gefertigt. Die Fertigung des Einbauteils aus Kunststoff ermöglicht vorteilhaft eine einfache und kostengünstige Herstellung des Einbauteils. Die Fertigung des Einbauteils aus Metall ermöglicht vorteilhaft eine besonders stabile Ausführung des Einbauteils.

Bei dem erfindungsgemäßen Verfahren zur Herstellung einer erfindungsgemäßen Messvorrichtung wird der Einbauteil mit einem 3D-Druck oder als ein Drehteil, ein Frästeil oder ein Schweißteil aus Kunststoff oder Metall gefertigt.

Eine erfindungsgemäße Gießkokille umfasst wenigstens eine erfindungsgemäße Messvorrichtung und wenigstens eine Seitenwandplatte mit wenigstens einer Plattenausnehmung, in der der Einbauteil der Messvorrichtung angeordnet ist, und einem mit der Plattenausnehmung verbundenen Messkanal, in dem ein außerhalb des Einbauteils verlaufender Teil des Messabschnitts des faseroptischen Sensors der Messvorrichtung angeordnet ist. Der Messkanal ist als eine vertikal verlaufende Bohrung in der Seitenwandplatte ausgebildet und weist einen Durchmesser von 1 mm bis 4 mm auf.

Die erfindungsgemäße Gießkokille weist wenigstens einen Zuleitkanal auf, in dem ein Teil wenigstens eines Zuleitabschnitts des faseroptischen Sensors einer Messvorrichtung angeordnet ist. Dabei verläuft der Zuleitkanal in einer Seitenwandplatte der Gießkokille und/oder in einer eine Seitenwandplatte stützenden Stützplatte der Gießkokille.

Bei der erfindungsgemäßen Gießkokille weist der Einbauteil einer erfindungsgemäßen Messvorrichtung eine den Referenzpunkt aufweisende Anlagefläche auf und die Plattenausnehmung, in der der Einbauteil angeordnet ist, weist eine Stützfläche auf, an der die Anlagefläche anliegt. Dies ermöglicht vorteilhaft die oben bereits genannte definierte Positionierung des wenigstens einen Faser-Bragg-Gitters einer Messvorrichtung für eine Temperaturmessung durch die Platzierung des Einbauteils an der Stützfläche, die gleichzeitig auch eine Positionierung des wenigstens einen Faser-Bragg-Gitters bedingt.

Eine erfindungsgemäße Gießkokille ermöglicht den Einbau und Ausbau wenigstens eines faseroptischen Sensors in eine beziehungsweise aus einer Seitenwandplatte der Gießkokille und damit insbesondere die Wiederverwendbarkeit des faseroptischen Sensors mit den oben bereits genannten Vorteilen. Beim Einbau werden der Einbauteil der Messvorrichtung in die Plattenausnehmung und der Messabschnitt des faseroptischen Sensors in den Messkanal der Seitenwandplatte eingebracht. Beim Ausbau werden entsprechend der Einbauteil der Messvorrichtung aus der Plattenausnehmung und der Messabschnitt des faseroptischen Sensors aus dem Messkanal der Seitenwandplatte herausgeführt.

Der Zuleitkanal ermöglicht vorteilhaft die Führung des Zuleitabschnitts wenigstens eines faseroptischen Sensors sowie dessen Schutz, beispielsweise durch eine Abdeckung des Zuleitkanals. Insbesondere können in einem Zuleitkanal die Zuleitabschnitte von faseroptischen Sensoren mehrerer erfindungsgemäßer Messvorrichtungen angeordnet werden, deren Messabschnitte in verschiedenen Messkanälen in der Seitenwandplatte angeordnet sind.

Eine Ausgestaltung der erfindungsgemäßen Gießkokille weist ein oben bereits genanntes Dichtelement auf, das zwischen einer Außenoberfläche des Einbauteils einer Messvorrichtung und einer Ausnehmungswandung der Plattenausnehmung, in der der Einbauteil angeordnet ist, in der Nähe der Verbindung der Plattenausnehmung mit dem mit der Plattenausnehmung verbundenen Messkanal angeordnet ist. Durch das Dichtelement wird der faseroptische Sensor der Messvorrichtung vorteilhaft vor Feuchtigkeit und Schmutz geschützt, die andernfalls durch die Plattenausnehmung dringen könnten.

Bei einer Weitergestaltung der vorgenannten Ausgestaltung der erfindungsgemäßen Gießkokille weist der Einbauteil einen nasenartigen Dichtungsabschnitt auf, aus dem der Messabschnitt eines faseroptischen Sensors herausgeführt ist und der in einen korrespondierenden Dichtungsbereich der Plattenausnehmung eingesetzt ist, der mit dem Messkanal verbunden ist und in dem das Dichtelement angeordnet ist. Insbesondere kann das Dichtelement als ein ringförmig um den Dichtungsabschnitt des Einbauteils herum verlaufender O-Ring oder als eine an dem Dichtungsabschnitt angeordnete Flachdichtung ausgebildet sein. Dadurch wird eine zweckmäßige Anordnung und Ausbildung des Dichtelements erreicht. Gleichzeitig kann der nasenartige Dichtungsabschnitt die Positionierung des Einbauteils in der Plattenausnehmung der Seitenwandplatte erleichtern.

Bei einer weiteren Ausgestaltung der erfindungsgemäßen Gießkokille weist die Gießkokille wenigstens einen Flansch auf, in dem ein Ende wenigstens eines Zuleitabschnitts angeordnet ist oder durch den ein Ende wenigstens eines Zuleitabschnitts geführt ist und der an einer Seitenwandplatte der Gießkokille und/oder an einer eine Seitenwandplatte stützenden Stützplatte der Gießkokille angeordnet ist. Der Flansch weist beispielsweise zwei lösbar miteinander verbundene Flanschteile auf. Durch den Flansch kann das Ende wenigstens eines Zuleitabschnitts vor Feuchtigkeit und Schmutz und gegen mechanische Einwirkungen geschützt werden. Ferner kann in oder an dem Flansch eine optische Schnittstelle angeordnet werden, über die wenigstens ein faseroptischer Sensor mit einem optischen Interrogator verbindbar ist, der zum Auswerten der Messsignale des faseroptischen Sensors eingerichtet ist. Die Ausführung des Flansches mit zwei lösbar miteinander verbundenen Flanschteilen ermöglicht insbesondere, den Flansch zum Verbinden eines optischen Interrogators mit wenigstens einem faseroptischen Sensor, beispielsweise über einen Verbindungslichtwellenleiter, zu öffnen.

Bei dem erfindungsgemäßen Verfahren zum Betreiben einer erfindungsgemäßen Gießkokille wird mit einer Messvorrichtung an wenigstens einer Messposition in der Seitenwandplatte eine Temperatur erfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 einen Teil einer Seitenwandplatte, einen Teil einer Stützplatte und Messvorrichtungen einer Gießkokille in einer perspektivischen Darstellung,
FIG 2 eine perspektivische Darstellung jeweils eines Teils einer Seitenwandplatte, einer Stützplatte und einer Abdeckplatte einer Gießkokille,
FIG 3 eine Seitenwandplatte, eine Stützplatte und Messvorrichtungen einer Gießkokille in einer perspektivische Schnittdarstellung,
FIG 4 eine Schnittdarstellung einer Gießkokille im Bereich eines Einbauteils einer Messvorrichtung.

Einander entsprechende Teile sind in den Figuren mit denselben Bezugszeichen versehen.

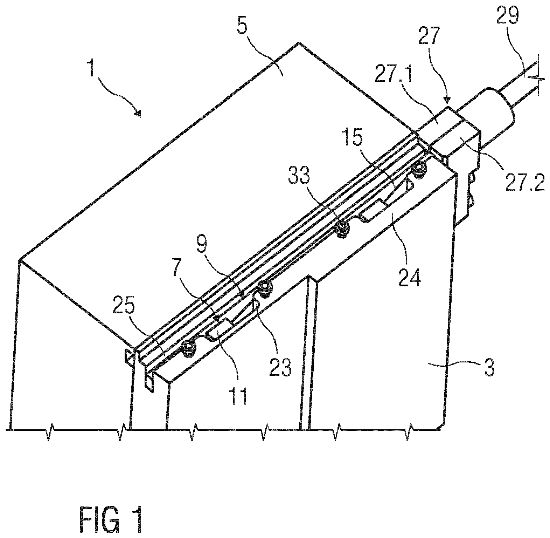

Die Figuren 1 bis 4 (FIG 1 bis FIG 4) zeigen ein Ausführungsbeispiel einer erfindungsgemäßen Gießkokille 1, wobei nur erfindungsrelevante Komponenten der Gießkokille 1 gezeigt sind. In den Figuren gezeigte Komponenten der Gießkokille 1 sind eine Seitenwandplatte 3, eine Stützplatte 5 und mehrere erfindungsgemäße Messvorrichtungen 7, die jeweils zur Temperaturerfassung in der Seitenwandplatte 3 eingerichtet sind.

Die Seitenwandplatte 3 steht im Betrieb der Gießkokille 1 in Kontakt mit einem teilerstarrten metallischen Strang, der sich aus in die Gießkokille 1 gegossener Metallschmelze bildet. Beispielsweise ist die Seitenwandplatte 3 eine Kupferplatte.

Die Stützplatte 5, die auch als Back-Up-Platte bezeichnet wird, liegt an einer von dem metallischen Strang abgewandten Oberfläche der Seitenwandplatte 3 an und dient der Stützung und Kühlung der Seitenwandplatte 3.

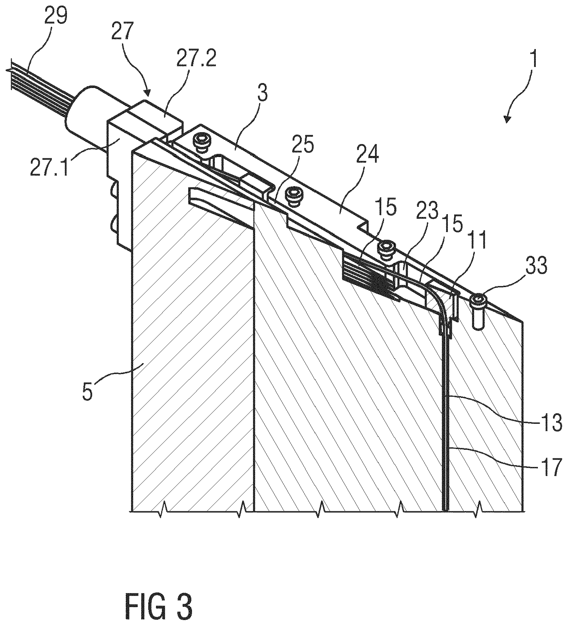

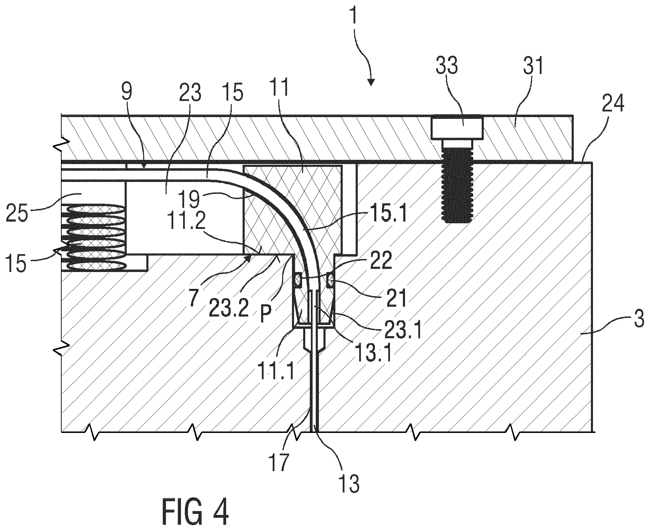

Jede Messvorrichtung 7 umfasst einen faseroptischen Sensor 9 und einen Einbauteil 11. Der faseroptische Sensor 9 umfasst einen Messabschnitt 13, der zur Temperaturerfassung eingerichtet ist, und einen Zuleitabschnitt 15, der zum Zuleiten elektromagnetischer Strahlung zu dem Messabschnitt 13 und Ableiten elektromagnetischer Strahlung aus dem Messabschnitt 13 eingerichtet ist. Der Messabschnitt 13 und der Zuleitabschnitt 15 sind innerhalb des Einbauteils 11 in unten anhand der Figuren 3 und 4 näher beschriebener Weise geführt und miteinander verbunden.

Figur 1 (FIG 1) zeigt einen Teil einer Seitenwandplatte 3, einen Teil einer Stützplatte 5 sowie Einbauteile 11 und Zuleitabschnitte 15 von Messvorrichtungen 7 der Gießkokille 1 in einer perspektivischen Darstellung.

Die Seitenwandplatte 3 weist mehrere Plattenausnehmungen 23 auf, in denen jeweils der Einbauteil 11 einer Messvorrichtung 7 angeordnet ist. Die Plattenausnehmungen 23 sind Öffnungen in einer Oberseite 24 der Seitenwandplatte 3, die durch einen horizontal in der Oberseite 24 der Seitenwandplatte 3 verlaufenden rinnenartigen Zuleitkanal 25 miteinander verbunden sind. In dem Zuleitkanal 25 sind die Zuleitabschnitte 15 von faseroptischen Sensoren 9 jeweils von einem seitlich an der Seitenwandplatte 3 angeordneten Flansch 27 zu einem Einbauteil 11 geführt.

Die Zuleitabschnitte 15 sind jeweils Lichtwellenleiter, die beispielsweise jeweils eine elastische Schutzummantelung aus Kunststoff aufweisen. In dem Flansch 27 sind Enden der Zuleitabschnitte 15 angeordnet. Diese Enden der Zuleitabschnitte 15 sind mit einer in oder an dem Flansch 27 angeordneten optischen Schnittstelle verbunden, die über Verbindungslichtwellenleiter 29 mit einem (nicht dargestellten) optischen Interrogator verbunden ist, der zum Auswerten der Messsignale der faseroptischen Sensoren 9 eingerichtet ist. Die Verbindungslichtwellenleiter 29 sind mit der optischen Schnittstelle beispielsweise über optische Stecker verbunden. Der Flansch 27 besteht aus zwei lösbar miteinander verbundenen Flanschteilen 27.1, 27.2, so dass der Flansch zum Verbinden der Verbindungslichtwellenleiter 29 und/oder der Zuleitabschnitte 15 mit der optischen Schnittstelle geöffnet werden kann.

Der Zuleitkanal 25 ist zum Schutz der faseroptischen Sensoren 9 vor Feuchtigkeit und Schmutz durch eine Abdeckplatte 31 verschlossen.

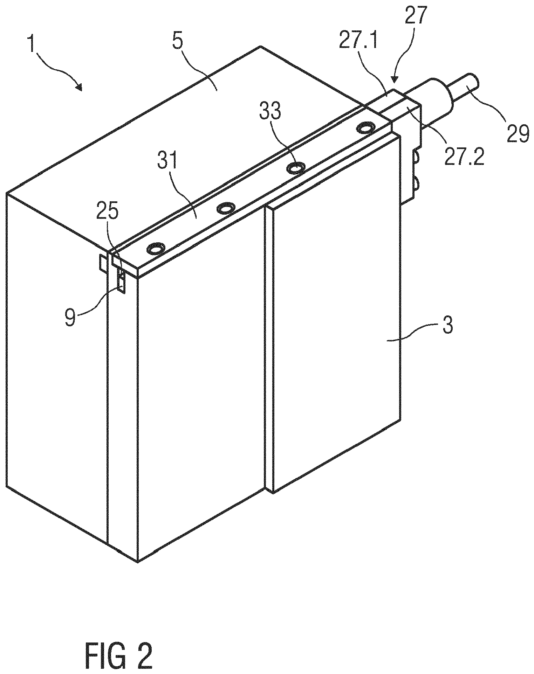

Figur 2 (FIG 2) zeigt eine perspektivische Darstellung jeweils eines Teils der Seitenwandplatte 3, der Stützplatte 5 und der Abdeckplatte 31 der Gießkokille 1. Die Abdeckplatte 31 ist durch Schraubelemente 33 lösbar mit der Oberseite 24 der Seitenwandplatte 3 verbunden.

In den Figuren 1 und 2 ist ein erster Bereich der Seitenwandplatte 3, an dem seitlich der Flansch 27 angeordnet ist, dicker dargestellt als ein zweiter Bereich, der sich in den Figuren 1 und 2 links an den ersten Bereich anschließt. Der erste Bereich stellt die Seitenwandplatte 3 in ihrem Neuzustand dar, der zweite Bereich stellt die Seitenwandplatte 3 im abgenutzten Zustand dar, in dem die Seitenwandplatte 3 ausgetauscht werden muss. Die Dicke der Seitenwandplatte 3 beträgt beispielsweise im Neuzustand etwa 40 mm und im abgenutzten Zustand etwa 25 mm. Die Seitenwandplatte 3 weist beispielsweise eine Höhe im Bereich von etwa 700 mm bis 1200 mm und eine Breite im Bereich von etwa 60 mm bis 3500 mm auf.

Figur 3 (FIG 3) zeigt die Seitenwandplatte 3, Stützplatte 5 und Messvorrichtungen 7 der Gießkokille 1 in einer perspektivischen Schnittdarstellung.

Figur 4 (FIG 4) zeigt eine Schnittdarstellung der Gießkokille 1 im Bereich des Einbauteils 11 einer Messvorrichtung 7.

Jede Plattenausnehmung 23 in der Seitenwandplatte 3 ist mit einem Messkanal 17 in der Seitenwandplatte 3 verbunden, der eine vertikal verlaufende Bohrung in der Seitenwandplatte 3 ist. In dem Messkanal 17 verläuft der Messabschnitt 13 eines faseroptischen Sensors 9, der aus dem Einbauteil 11 herausgeführt ist, der in der mit dem Messkanal 17 verbundenen Plattenausnehmung 23 angeordnet ist. Der Messkanal 17 weist beispielsweise einen Durchmesser im Bereich von etwa 1 mm bis 4 mm auf.

Der Messabschnitt 13 eines faseroptischen Sensors 9 weist einen Lichtwellenleiter mit wenigstens einem Faser-Bragg-Gitter auf. Der Lichtwellenleiter ist in einer Schutzkanüle angeordnet. Die Schutzkanüle ist beispielsweise aus Edelstahl gefertigt und weist beispielsweise einen Außendurchmesser von etwa 1 mm bis 3,8 mm auf.

Der Einbauteil 11 einer Messvorrichtung 7 weist einen Führungskanal 19 auf, in dem ein Zuleitendabschnitt 15.1 des Zuleitabschnitts 15 und ein Messendabschnitt 13.1 des Messabschnitts 13 des faseroptischen Sensors 9 der Messvorrichtung 7 angeordnet und miteinander verbunden sind. Der Zuleitendabschnitt 15.1 und der Messendabschnitt 13.1 des faseroptischen Sensors 9 sind mit dem Einbauteil 11 beispielsweise durch einen Klebstoff verklebt. Der Klebstoff füllt beispielsweise einen Zwischenraum zwischen einer Führungskanalwandung des Führungskanals 19 und dem Zuleitendabschnitt 15.1 sowie dem Messendabschnitt 13.1 des faseroptischen Sensors 9 vollständig aus.

Der Einbauteil 11 einer Messvorrichtung 7 weist einen nasenartigen Dichtungsabschnitt 11.1 auf, aus dem der Messabschnitt 13 des faseroptischen Sensors 9 herausgeführt ist. Der Einbauteil 11 ist derart in die Plattenausnehmung 23 eingesetzt, dass eine Auflagefläche 11.2 des Einbauteils 11 eine Stützfläche 23.2 der Plattenausnehmung 23 kontaktiert und der Dichtungsabschnitt 11.1 in einen korrespondierenden Dichtungsbereich 23.1 der Plattenausnehmung 23 eingesetzt ist, der mit dem Messkanal 17 verbunden ist. Die Auflagefläche 11.2 stellt einen Referenzpunkt P dar, relativ zu dem das zumindest eine Faser-Bragg-Gitter des faseroptischen Sensors 9 in einem vorgegebenen Abstand angeordnet ist. Durch den Kontakt der Auflagefläche 11.2 mit der Stützfläche 23.2 ist das zumindest eine Faser-Bragg-Gitter des faseroptischen Sensors 9 somit auch in einer definierten Position relativ zu der Seitenwandplatte 3 der Gießkokille 1 angeordnet. An dem Dichtungsabschnitt 11.1 ist ein Dichtelement 21 angeordnet, das einen Zwischenraum zwischen der Außenoberfläche des Dichtungsabschnitts 11.1 und der Wandung des Dichtungsbereichs 23.1 abdichtet. Das Dichtelement 21 ist in diesem Ausführungsbeispiel ein O-Ring, der in einer ringförmigen Nut 22 in dem Dichtungsabschnitt 11.1 angeordnet ist.

Der Einbauteil 11 einer Messvorrichtung 7 wird mit einem 3D-Druck oder als ein Drehteil, ein Frästeil oder ein Schweißteil aus Kunststoff oder Metall gefertigt. Abgesehen von dem Dichtungsabschnitt 11.1 ist der Einbauteil 11 im Wesentlichen quaderförmig mit einer Höhe und Breite von beispielsweise jeweils etwa 30 mm und einer Tiefe von beispielsweise etwa 18 mm ausgebildet.

Die anhand der Figuren 1 bis 4 beschriebenen Ausführungsbeispiele einer Gießkokille 1 und einer Messvorrichtung 7 können auf verschiedene Weise zu anderen Ausführungsbeispielen abgewandelt werden. Beispielsweise kann der Zuleitkanal 25 ganz oder teilweise in der Stützplatte 5 angeordnet sein. Alternativ oder zusätzlich kann das Dichtelement 21 einer Messvorrichtung 7 statt als ein O-Ring als eine andere Dichtung, beispielsweise als eine Flachdichtung ausgeführt sein. Alternativ kann der Zuleitabschnitt 15 einer Messvorrichtung 7 zwei Zuleitteilabschnitte aufweisen, wobei ein erster Zuleitteilabschnitt vollständig außerhalb des Einbauteils 11 verläuft und eine elastische Schutzummantelung aus Kunststoff aufweist und ein zweiter Zuleitteilabschnitt den ersten Zuleitteilabschnitt mit dem Messabschnitt 13 verbindet, teilweise innerhalb des Einbauteils 11 verläuft und eine starre, beispielsweise metallische Schutzummantelung aufweist. Des Weiteren können die Enden der Zuleitabschnitte 15 durch den Flansch 27 geführt sein und außerhalb des Flansches 27 mit den Verbindungslichtwellenleitern 29 verbunden sein. Ferner kann die Abdeckplatte 31 in anderer Weise als durch Schraubelemente 33 mit der Seitenwandplatte 23 verbunden sein, beispielsweise durch eine Klebung.

### Bezugszeichenliste

- 1: Gießkokille
- 3: Seitenwandplatte
- 5: Stützplatte
- 7: Messvorrichtung
- 9: faseroptischer Sensor
- 11: Einbauteil
- 11.1: Dichtungsabschnitt
- 11.2: Anlagefläche
- 13: Messabschnitt
- 13.1: Messendabschnitt
- 15: Zuleitabschnitt
- 15.1: Zuleitendabschnitt
- 17: Messkanal
- 19: Führungskanal
- 21: Dichtelement
- 22: Nut
- 23: Plattenausnehmung
- 23.1: Dichtungsbereich
- 23.2: Stützfläche
- 24: Oberseite
- 25: Zuleitkanal
- 27: Flansch
- 27.1, 27.2: Flanschteil
- 29: Verbindungslichtwellenleiter
- 31: Abdeckplatte
- 33: Schraubelement
- P: Referenzpunkt

## Patentansprüche

1. Messvorrichtung (7) zur Temperaturerfassung in einer Seitenwandplatte (3) einer Gießkokille (1), die Messvorrichtung (7) umfassend
- einen faseroptischen Sensor (9) mit einem Messabschnitt (13), der zur Temperaturerfassung eingerichtet ist, und einem Zuleitabschnitt (15), der zum Zuleiten elektromagnetischer Strahlung zu dem Messabschnitt (13) und Ableiten elektromagnetischer Strahlung aus dem Messabschnitt (13) eingerichtet ist, und
- einen Einbauteil (11), innerhalb dessen ein Teil des Messabschnitts (13) verläuft, wobei
- der Messabschnitt (13) des faseroptischen Sensors (9) einen Lichtwellenleiter mit wenigstens einem Faser-Bragg-Gitter in einem außerhalb des Einbauteils (11) verlaufenden Teil des Messabschnitts (13) aufweist,
- wobei das Faser-Bragg-Gitter in einem vorgegebenen Abstand von einem Referenzpunkt (P) einer Anlagefläche (11.2) des Einbauteils (11) an dem Einbauteil (11) angeordnet ist,
- wobei ein Teil des Zuleitabschnitts (15) innerhalb des Einbauteils (11) verläuft und der Zuleitabschnitt (15) und der Messabschnitt (13) innerhalb des Einbauteils (11) miteinander verbunden sind, und
- wobei der faseroptische Sensor (9) innerhalb des Einbauteils (11) gekrümmt verläuft.

2. Messvorrichtung (7) nach Anspruch 1 mit einem Dichtelement (21), das an einer Außenoberfläche des Einbauteils (11) angeordnet ist.

3. Messvorrichtung (7) nach Anspruch 1 oder 2, wobei der Einbauteil (11) einen Führungskanal (19) aufweist, in dem der innerhalb des Einbauteils (11) verlaufende Teil des Messabschnitts (13) des faseroptischen Sensors (9) angeordnet ist.

4. Messvorrichtung (7) nach einem der vorhergehenden Ansprüche, wobei der Messabschnitt (13) des faseroptischen Sensors (9) mit dem Einbauteil (11) durch einen Klebstoff verklebt ist.

5. Messvorrichtung (7) nach den Ansprüchen 3 und 4, wobei der Klebstoff einen Zwischenraum zwischen einer Führungskanalwandung des Führungskanals (19) und dem Messabschnitt (13) des faseroptischen Sensors (9) vollständig ausfüllt.

6. Verfahren zur Herstellung einer Messvorrichtung (7) nach einem der vorhergehenden Ansprüche, wobei der Einbauteil (11) mit einem 3D-Druck oder als ein Drehteil, ein Frästeil oder ein Schweißteil aus Kunststoff oder Metall gefertigt wird.

7. Gießkokille (1), umfassend
- wenigstens eine Messvorrichtung (7) nach einem der Ansprüche 1 bis 5,
- wenigstens eine Seitenwandplatte (3) mit wenigstens einer Plattenausnehmung (23), in der der Einbauteil (11) der Messvorrichtung (7) angeordnet ist, und einem mit der Plattenausnehmung (23) verbundenen Messkanal (17), in dem ein außerhalb des Einbauteils (11) verlaufender Teil des Messabschnitts (13) des faseroptischen Sensors (9) der Messvorrichtung (7) angeordnet ist, und
- wenigstens einen Zuleitkanal (25), in dem ein Teil wenigstens eines Zuleitabschnitts (15) des faseroptischen Sensors (9) der Messvorrichtung (7) angeordnet ist, wobei der Zuleitkanal (25) in der Seitenwandplatte (3) der Gießkokille (1) und/oder in einer die Seitenwandplatte (3) stützenden Stützplatte (5) der Gießkokille (1) verläuft,
- wobei die Plattenausnehmung (23), in der der Einbauteil (11) angeordnet ist, eine Stützfläche (23.2) aufweist, an der die Anlagefläche (11.2) anliegt, und
- wobei der Messkanal (17) eine vertikal verlaufende Bohrung in der Seitenwandplatte (3) ist und einen Durchmesser von 1 mm bis 4 mm aufweist.

8. Gießkokille (1) nach Anspruch 7 mit einem
Dichtelement (21), das zwischen einer Außenoberfläche des Einbauteils (11) einer Messvorrichtung (7) und einer Ausnehmungswandung der Plattenausnehmung (23), in der der Einbauteil (11) angeordnet ist, in der Nähe der Verbindung der Plattenausnehmung (23) mit dem mit der Plattenausnehmung (23) verbundenen Messkanal (17) angeordnet ist.

9. Gießkokille (1) nach Anspruch 8, wobei der Einbauteil (11) einen nasenartigen Dichtungsabschnitt (11.1) aufweist, aus dem der Messabschnitt (13) eines faseroptischen Sensors (9) herausgeführt ist und der in einen korrespondierenden Dichtungsbereich (23.1) der Plattenausnehmung (23) eingesetzt ist, der mit dem Messkanal (17) verbunden ist und in dem das Dichtelement (21) angeordnet ist.

10. Gießkokille (1) nach Anspruch 9, wobei das Dichtelement (21) als ein ringförmig um den Dichtungsabschnitt (11.1) des Einbauteils (11) herum verlaufender O-Ring oder als eine an dem Dichtungsabschnitt (11.1) angeordnete Flachdichtung ausgebildet ist.

11. Verfahren zum Betreiben einer Gießkokille (1) nach einem der Ansprüche 7 bis 10, wobei mit einer Messvorrichtung (7) an wenigstens einer Messposition in der Seitenwandplatte (3) eine Temperatur erfasst wird.

## Claims

1. Measuring device (7) for detecting the temperature in a side wall plate (3) of a casting mould (1), the measuring device (7) comprising
- a fibre-optic sensor (9) having a measuring portion (13) configured to detect the temperature and a feed portion (15) configured to feed electromagnetic radiation to the measuring portion (13) and remove electromagnetic radiation from the measuring portion (13), and
- an installation part (11), within which a part of the measuring portion (13) extends, wherein
- the measuring portion (13) of the fibre-optic sensor (9) comprises an optical waveguide having at least one fibre Bragg grating in a part of the measuring portion (13) extending outside of the installation part (11),
- wherein the fibre Bragg grating is arranged on the installation part (11) at a given distance from a reference point (P) of an abutment area (11.2) of the installation part (11),
- wherein a part of the feed portion (15) extends within the installation part (11), and the feed portion (15) and the measuring portion (13) are connected to one another within the installation part (11), and
- wherein the fibre-optical sensor (9) has a curved extent within the installation part (11).

2. Measuring device (7) according to Claim 1, comprising a sealing element (21) arranged on an outer surface of the installation part (11).

3. Measuring device (7) according to Claim 1 or 2, wherein the installation part (11) comprises a guide channel (19), arranged in which is the part of the measuring portion (13) of the fibre-optic sensor (9) extending within the installation part (11).

4. Measuring device (7) according to any of the preceding claims, wherein the measuring portion (13) of the fibre-optic sensor (9) is adhesively bonded to the installation part (11) by way of an adhesive.

5. Measuring device (7) according to Claims 3 and 4, wherein the adhesive completely fills an intermediate space between a guide channel wall of the guide channel (19) and the measuring portion (13) of the fibre-optic sensor (9).

6. Method for producing a measuring device (7) according to any of the preceding claims, wherein the installation part (11) is manufactured using 3-D printing or as a turned part, a milled part or a welded part made out of plastic or metal.

7. Casting mould (1), comprising
- at least one measuring device (7) according to any of Claims 1 to 5,
- at least one side wall plate (3) having at least one plate recess (23), in which the installation part (11) of the measuring device (7) is arranged, and a measuring channel (17), which is connected to the plate recess (23) and arranged in which is a part of the measuring portion (13) of the fibre-optic sensor (9) of the measuring apparatus (7) extending outside of the installation part (11), and
- at least one feed channel (25), arranged in which is a part of at least one feed portion (15) of the fibre-optic sensor (9) of the measuring apparatus (7), wherein the feed channel (25) extends in the side wall plate (3) of the casting mould (1) and/or in a support plate (5) of the casting mould (1) that supports the side wall plate (3),
- wherein the plate recess (23), in which the installation part (11) is arranged, comprises a support area (23.2), against which the abutment area (11.2) rests, and
- wherein the measuring channel (17) is a vertically running drilled hole in the side wall plate (3) and has a diameter ranging from 1 mm to 4 mm.

8. Casting mould (1) according to Claim 7, comprising a sealing element (21) which is arranged between an outer surface of the installation part (11) of a measuring device (7) and a recess wall of the plate recess (23), in which the installation part (11) is arranged, in the proximity of the connection of the plate recess (23) to the measuring channel (17) connected to the plate recess (23).

9. Casting mould (1) according to Claim 8, wherein the installation part (11) comprises a lug-like sealing portion (11.1), from which the measuring portion (13) of a fibre-optic sensor (9) is guided out and which is inserted in a corresponding sealing region (23.1) of the plate recess (23), which is connected to the measuring channel (17) and in which the sealing element (21) is arranged.

10. Casting mould (1) according to Claim 9, wherein the sealing element (21) is embodied as an O-ring extending around the sealing portion (11.1) of the installation part (11) in ringshaped fashion or as a flat seal arranged on the sealing portion (11.1).

11. Method for operating a casting mould (1) according to any of Claims 7 to 10, wherein a temperature is detected at at least one measurement position in the side wall plate (3) using a measuring device (7).

## Revendications

1. Dispositif de mesure (7) pour la détection de la température dans une plaque de paroi latérale (3) d'une lingotière de coulée (1), le dispositif de mesure (7) comprenant
- un capteur à fibre optique (9) avec une section de mesure (13) qui est configurée à la détection de la température et une section d'alimentation (15) qui est configurée pour l'alimentation du rayonnement électromagnétique à la section de mesure (13) et pour l'évacuation du rayonnement électromagnétique de la section de mesure (13), et
- une partie de montage (11) à l'intérieur de laquelle s'étend une partie de la section de mesure (13), dans lequel
- la section de mesure (13) du capteur à fibre optique (9) comprend un guide d'onde optique avec au moins un réseau de Bragg sur fibre dans une partie de la section de mesure (13) s'étendant à l'extérieur de l'élément de montage (11),
- dans lequel le réseau de Bragg sur fibre est disposé à une distance prédéterminée d'un point de référence (P) d'une surface d'appui (11.2) de la pièce de montage (11) sur la pièce de montage (11),
- dans lequel une partie de la section d'alimentation (15) s'étend à l'intérieur de l'élément de montage (11) et la section d'alimentation (15) et la section de mesure (13) sont reliées entre elles à l'intérieur de l'élément de montage (11), et
- dans lequel le capteur à fibre optique (9) s'étend de manière incurvée à l'intérieur de l'élément de montage (11).

2. Dispositif de mesure (7) selon la revendication 1 avec un élément d'étanchéité (21) qui est disposé sur une surface extérieure de l'élément de montage (11).

3. Dispositif de mesure (7) selon la revendication 1 ou 2, dans lequel la pièce de montage (11) présente un canal de guidage (19) dans lequel est disposée la partie de la section de mesure (13) du capteur à fibre optique (9) qui s'étend à l'intérieur de la pièce de montage (11).

4. Dispositif de mesure (7) selon l'une des revendications précédentes, dans lequel la section de mesure (13) du capteur à fibre optique (9) est collée à la pièce de montage (11) par un adhésif.

5. Dispositif de mesure (7) selon les revendications 3 et 4, dans lequel l'adhésif remplit complètement un espace intermédiaire entre une paroi de canal de guidage du canal de guidage (19) et la section de mesure (13) du capteur à fibre optique (9).

6. Procédé de fabrication d'un dispositif de mesure (7) selon l'une des revendications précédentes, dans lequel la pièce de montage (11) est fabriquée par impression 3D ou sous la forme d'une pièce tournée, d'une pièce fraisée ou d'une pièce soudée en plastique ou en métal.

7. Lingotière de coulée (1), comprenant
- au moins un dispositif de mesure (7) selon l'une des revendications 1 à 5,
- au moins une plaque de paroi latérale (3) avec au moins un évidement de plaque (23), dans lequel est disposée la partie de montage (11) du dispositif de mesure (7), et un canal de mesure (17) relié à l'évidement de plaque (23), dans lequel est disposée une partie, s'étendant à l'extérieur de la partie de montage (11), de la section de mesure (13) du capteur à fibre optique (9) du dispositif de mesure (7), et
- au moins un canal d'alimentation (25) dans lequel est disposée une partie d'au moins une section d'alimentation (15) du capteur à fibre optique (9) du dispositif de mesure (7), le canal d'alimentation (25) s'étendant dans la plaque de paroi latérale (3) de la lingotière de coulée (1) et/ou dans une plaque d'appui (5) de la lingotière de coulée (1) soutenant la plaque de paroi latérale (3),
- dans laquelle l'évidement de plaque (23), dans lequel est disposée la pièce de montage (11), présente une surface d'appui (23.2) contre laquelle s'applique la surface d'appui (11.2), et
- dans laquelle le canal de mesure (17) est un alésage s'étendant verticalement dans la plaque de paroi latérale (3) et présente un diamètre de 1 mm à 4 mm.

8. Lingotière de coulée (1) selon la revendication 7, comprenant un élément d'étanchéité (21) disposé entre une surface extérieure de la partie de montage (11) d'un dispositif de mesure (7) et une paroi d'évidement de l'évidement de plaque (23) dans laquelle la partie de montage (11) est disposée, à proximité de la connexion de l'évidement de plaque (23) avec le canal de mesure (17) relié à l'évidement de plaque (23).

9. Lingotière de coulée (1) selon la revendication 8, dans laquelle la pièce de montage (11) présente une section d'étanchéité (11.1) en forme de nez, de laquelle sort la section de mesure (13) d'un capteur à fibre optique (9) et qui est insérée dans une zone d'étanchéité (23.1) correspondante de l'évidement de plaque (23), qui est reliée au canal de mesure (17) et dans laquelle est disposé l'élément d'étanchéité (21) .

10. Lingotière de coulée (1) selon la revendication 9, dans laquelle l'élément d'étanchéité (21) est réalisé sous la forme d'un joint torique s'étendant en forme d'anneau autour de la section d'étanchéité (11.1) de la pièce de montage (11) ou sous la forme d'un joint plat disposé sur la section d'étanchéité (11.1).

11. Procédé de fonctionnement d'une lingotière de coulée (1) selon l'une des revendications 7 à 10, dans lequel une température est détectée à l'aide d'un dispositif de mesure (7) en au moins une position de mesure dans la plaque de paroi latérale (3).
